# EUROPEAN PATENT APPLICATION

(11) **EP 1 052 570 A1**
(43) Date of publication of application: **15.11.2000**
(21) Application number: 99201494.4
(22) Date of filing: 12.05.1999
(51) Int. Cl.: G06F 9/44

(54) **System of instances and method of processing such system**

(71) Applicant: M.M. Multimedia A/S, 8000 Aarhus C (DK)
(72) Inventor: Jörgensen, Bo, 8000 Aarhus C (DK); Borum, Anders, 8000 Aarhus C (DK)
(74) Representative: Elmeros, Claus

(57) **Abstract**

The invention relates to a system of instances (I), each instance (I) comprising at least zero set of variables, each set of variable having at least one possible state (PS)
said system comprising at least one operator interface (OI)
   said operator interface (OI) enabling at least one operator (O) to command a set of dedicated operator instances (DOI) by means of operator commands (OC)
   said commands (OC) enabling the said operator to modify the said dedicated operator instances (DOI) according to rules (R)
said system comprising at least one privileged operator interface (POI)
   said privileged operator interface (POI) enabling at least one privileged operator (PO) to command a set of dedicated privileged operator instances (DPOI) by means of privileged operator commands (POC)
   said commands (POC) enabling the said privileged operator (PO) to modify the said dedicated privileged operator instances according to rules (R)
said system comprising at least one kernel (K)
   said kernel controlling/commanding a set of dedicated kernel instances (DKI) by means of kernel commands (KC)
   said kernel commands (KC) modifying the dedicated kernel instances (DKI) according to rules (R),
   and wherein said kernel may add or remove instances (I) according to rules (R)
said set(s) or a subset of said set(s) of dedicated operator instance(s) (DOI) being a subset of the said dedicated privileged operator instances (DPOI), and said dedicated privileged operator instance(s) (DPOI being a subset of the said dedicated kernel instances (DKI), said set of dedicated operator instances (DOI) being nonoverlapping.

The system according to the invention enables a standard processing supported by intuitive processing in the sense, that the privileged operator may overrule the operator within a certain domain of common instances. Consequently, commands established by the operator may be changed before execution, or alternatively after the execution by the kernel. Another feature of the invention is that the privileged operator may interact with the operators and provide processing of the instances which was never foreseen by the scripting of the kernel

## Description

### Background of the invention

The invention relates to a system of instances according to claim 1, method of processing such instances according to claim 18 a data carrier according to claim 19.

Generally, the prior art within computer based processing systems involving a interface for external operators comprises two kinds of concepts. The first type of concept includes e.g. networks, the operative system and the specific software applications such as word processing systems, spreadsheets or the like. The above systems may be regarded as more or less static, as every processing of data has to be initiated by a human operator. The systems are conceptually within the field of supporting certain kinds of operations made by an operator. Consequently, the systems will basically do nothing if no operator initiates certain actions. The above-described systems are not suited for processing of simulation, game playing, education or the like.

The second kind of prior art concepts are the concepts involving a system, which basically may process its data without a sequence of external actions made by an operator. The systems are pre-programmed in such a way, that the system itself may process the relevant data processes, and the systems may add an independent process to the actions of the operator. The systems may be experienced to function as an interactive inspiring counterpart. Types of such concepts are within the fields of simulation, game playing or the like.

A problem of the above mentioned type of system is that the inspiration experienced by the user is somewhat limited to be contained exactly in the pre-programming of the system. A further problem of the above system is that the hardware requirements needed to meet the still more comprehensive coding become impractical.

### The invention

The invention relates to a system of instances, each instance comprising at least zero set of variables, each set of variable having at least one possible state
said system comprising at least one operator interface
   said operator interface enabling at least one operator to command a set of dedicated operator instances by means of operator commands
   said commands enabling the said operator to modify the said dedicated operator instances according to rules
said system comprising at least one privileged operator interface
   said privileged operator interface enabling at least one privileged operator to command a set of dedicated privileged operator instances by means of privileged operator commands
   said privileged operator commands enabling the said privileged operator to modify the said dedicated privileged operator instances according to rules,
said system comprising at least one kernel
   said kernel controlling/commanding a set of dedicated kernel instances by means of kernel commands
   said kernel commands modifying the dedicated kernel instances according to rules,
   and wherein said kernel may add or remove instances according to rules
said set(s) or a subset of said set(s) of dedicated operator instance(s) being a subset of the said dedicated privileged operator instances, and said dedicated privileged operator instance(s) being a subset of the said dedicated kernel instances,
said set of dedicated operator instances (DOI) being non-overlapping.

The system according to the invention enables a standard processing supported by intuitive processing in the sense, that the privileged operator may overrule the operator within a certain domain of common instances. Consequently, commands established by the operator may be changed before execution, or alternatively after the execution by the kernel. Another feature of the invention is that the privileged operator may interact with the operators and provide processing of the instances which was never foreseen by the scripting of the kernel. Such interacting ensures, that elaboration with respect to the pre-programmed script of the kernel may be changed or supplemented by the privileged operator.

This common domain may even in certain applications be the complete set of dedicated operator instances. Accordingly, in such applications, a privileged operator has access to every instance the operator commands. Such unrestricted organising of the instances provides a high degree of freedom and possibilities to the privileged operator, and intuitive processing steps will support the kernel based processing.

If a fault, technical or conceptual occurs, the privileged operator may have the tools to bring the processing of the instances back on trail, as a privileged operator needs no full covering scripting foreseeing every step or sequences of steps of the processing of the instances.

The system of instances is well suited for a variety of applications such as education, simulation, multi-player games, such as role playing systems.

Regarding simulation, an intuitive process flow provided by the privileged operator will add the "real item" feeling to the processing of the instances, and an operator will be less able to predict coming events by simple recognition of an earlier experience. This feature reduces the burden of the programmers when the scripting is established, as the programmers may let privileged operator(s) dispose more or less freely over the instances defining the simulated reality. Consequently, events may occur which was never thought or specifically allowed by the scripting programmers, as these are exclusively established by the privileged operator having the natural and valuable intuition.

Regarding education programs, an intuitive process may be obtained as a privileged operator may support the basic kernel programming, i.e. the scripting, in the same way as above described. It should be noticed, that the an educational embodiment of the invention operates basically different from prior art educational systems, as the kernel, according to the invention has the ability to the remove and insert instances in the system of instances without any kind of accept by the privileged operator. Known educational systems are purely based on scripts or purely processed by a teacher and supported by the basic kernel programming, whereas the system according to the invention establishes that the privileged operator supports the scripting instead.

An important aspect of the invention is that the scripting of the processing of the instances prepared by the program designers may be simplified according to the invention. An example of such simplification is when the program designers are supplied with sequences of instances, which may hardly fit into the existing program structure. This "mismatch" may in prior systems result in that scripting needed in order to fit the sequence into the overall scripting becomes very comprehensive, and the sequence will typically be abandoned. According to the invention this sequence may be preprogrammed and prepared to the privileged operator in such a way that the operator may insert this sequence into the processing of instances.

When, as stated in claim 2, the said at least one privileged operator may add or remove instances from the dedicated kernel instance(s), an advantageous embodiment of the invention has been obtained.

When, as stated in claim 3, the said privileged operator commands having higher priority than the said operator commands, said kernel commands having higher priority than the said privileged operator commands, a further advantageous embodiment has been obtained

Due to the above prioritising the operators may experience a very smooth functioning of the system, as the kernel and the privileged operators are responsible for the overall performance of the system.

Moreover, the kernel commands will always be able to overrule the privileged operator commands, as the privileged operator only supports the kernel.

When, as stated in claim 4, at least a subset of the operator commands and/or a subset of the privileged operator commands are organised in at least two command categories in such a way that a first command category comprises commands resulting in a direct unconditional modification of the system of instances, and a second command category comprises commands resulting in a conditional modification of the system of instances, a very advantageous embodiment of the invention has been obtained.

A command of the first category may thus be sequence of unconditionally subcommands being initiated by e.g. an operator. In other words, a first category command will inevitably result in the desired result.

A command of the second category may be sequence of conditionally subcommands being initiated by e.g. an operator. It should be noted that the sequence of course may contain unconditionally subcommands without changing the fact that the command will perform as a conditional command. In other words, a second category command will only result in the desired result if certain more or less known conditions are fulfilled

A sequence may of course be one single subcommand.

When, as stated in claim 5, the said operator commands comprises second category commands, and wherein the said privileged operator commands comprises first and second category commands, preferably only first category commands, a further advantageous and attractive embodiment of the invention has been obtained.

When, as stated in claim 6, the set of operator commands is a subset of the privileged operator commands, a practical organising of the commands has been established.

When, as stated in claim 7, the said commands or a subset of said commands are pipelined through the privileged operator interface in such a way that at least one privileged operator may convert the said operator commands and in such a way the operator instances and/or the dedicated privileged operator instances may be modified according to the said converted operator commands according to rules, a further advantageous embodiment of the invention has been obtained, as the privileged operator may take directly part in the processing of instances in such a way that a conversion of operator commands to privileged operator is effected such that the original operator command are never executed. On the other hand the operator may choose not to change the operator commands. This type of intuitive access to the processing of operator instances adds an intelligent and intuitive to the process flow as seen from the operator, as the operator will never be able to acknowledge a canonical scripted pattern, as this scripted pattern will be coloured by the intuitive accessing of the privileged operator.

When, as stated in claim 8, each instance may contain further instances, i.e. sub-instances, a practical designing of the system has been obtained.

When, as stated in claim 9, each instance may be dynamically added or removed from the sets of instances in dependency of commands and rules, a further advantageous embodiment of the invention has been obtained, as the instances contained in the sets of instances may dynamically vary according to the processing of the system.

When, as stated in claim 10, the system of instances comprises a set of insertable instances or sequences of instances prepared and presented to the privileged operator in such a way that the operator may insert these instances or sequences of instances by means of privileged operator commands, the intuitive operation of a privileged operator may be supported in an extremely smooth way, as a privileged operator may be supplied with a little library or palette of possible actions, thus increasing the privileged operators possibility of acting intuitively when time and place actually occurs.

Moreover, and even more attractive, the program designers may provide e.g. small prepared sequences, which hardly fitted into the program design, when the kernel coding was established. This feature provides a unique synergy between human intuition and a computers ability to contain and present information.

When, as stated in claim 11, the operator interfaces are established in such a way that commanding of the dedicated privileged operator instances by means of privileged operator commands is hidden or partly hidden to the operators of the operator interfaces in such a way that the user(s) of the operator interfaces will only recognise the result of the said commands, a further advantageous way of processing the instances in certain types of processing systems, such as game playing, simulation or the like has been obtained.

A very important feature of the invention is encapsulated in the above described "melting together" of the privileged operator and the kernel. An operator will not distinguish between human or mechanically/electronically established counteracting, and the operator will consequently experience the complete system of intuitive instead of only experiencing a part of the system intuitive.

When, as stated in claim 12, the interfaces (OI, POI) are established in such a way that commanding of the dedicated instances (I) by means of commands (OC, POC, KC) is hidden or partly hidden to the operators (O, PO) of the interfaces (OI, POI) in such a way that the users will only recognise the result of the said commands (OC, POC, KC), a further advantageous way of processing the instances in systems of the above described types has been obtained.

According to the present embodiment of the invention, the operator interface and the privileged operator interface should assist the access to relevant data, but not the process by which the relevant data are established

When, as stated in claim 13, the said operator interface(s) (OI) comprises at least one set of operator interface instances (OII) representing at least a subset of said dedicated operator instances (DOI), said operator interface instances (OII) establishing an interface representation of the represented said at least a subset of dedicated operator instances, an advantageous system interface has been obtained, as every kind of operations initiated by operator commands is visually supported. Accordingly, the state or existence of dedicated operator instances may be provided to the operator via the interface.

According to the terms of the invention, an interface representation is an interface communication to the user by means of e.g. interactive audio or visual signals. Other types of interface operations enabling the perceiving of senses to a human being are possible. An example may e.g. be force feedback joysticks or virtual reality gloves.

When, as stated in claim 14, the at least one set the operator interface instances (OII) moreover represents at least one subset of the dedicated privileged operator instances (DPOI), a further advantageous embodiment of the invention has been obtained. Accordingly, instances represented visually to the user, may be operated by the privileged more or less independently by the operator, as the operator commands available to the operator are unable to command the dedicated privileged operator instances directly (of course these instances may be affected indirectly by operator commands initiating a sequence of incidents which may end up in a modification of the dedicated operator instances). Consequently, a privileged operator has the ability to modify instances related to an operator interface directly.

This feature makes it possible to establish systems of instances, which may be controlled by a privileged operator in such a way that every operator may be not only indirectly but also directly overruled by the privileged operator. This facilitates an advantageous system performance, as the rules of the kernel may be simplified significantly, in the sense that a more liberal approach to possible dead ends of the overall or a local segment of the system may be dealt with a little lazy, in the sense that the programming of the kernel may, in spite of the basic hazardous thought, may take greater risks, as dead ends, technical or conceptual, may be intuitively repaired by the privileged operator.

When, as stated in claim 15, the operator interface (OI) is adapted to at least two operators in such a way that each of the operators has access to the system of instances by means of a data processing unit, such as a personal computer (PC),

said system of instances being processed de-centrally on the said separate personal computers (PC), said personal computers communicating via a network, an advantageous multi-user system has been obtained.

Other examples of processing systems may be several stand-alone computers coupled to a central computer processing unit in such a way that the de-central stand alone units are primarily directed to establish the basic interface features such a sound and picture.

Computer systems may be designed in numerous ways in order to comply with the demands of the instance system and the processing of the system.

When, as stated in claim 16, the system as adapted for execution of multi-player games, a preferred embodiment of the invention has been obtained, as multi-player systems are a special kinds of games focussing on the interaction between the players.

The invention lifts prior systems from being a pure connection into complicated interactions between the player.

When, as stated in claim 17, each player accesses a role by means of the operator interface (OI), said role representing one role instance set (RIS), said role instance set (RIS) being the set of dedicated operator instances (DOI), a further advantageous embodiment has been obtained.

When dedicating one instance, i.e. the role to a player, the player may only inflict operations of instances outside the dedicated operator instances by an attempt to initiate a sequence of processing steps of the systems hopefully resulting in the desired result. Thus, the player may only directly control the role instance set.

It should be noted that a privileged operator may nevertheless, according to an embodiment of the invention, control instances outside the role instances, and he has the ability to establish a desired set of instances directly. This should be seen in the contrast to the more complicated operations required by the operator, i.e. the player, in order to obtain the same result, or at least trying to obtain the same result.

### The drawing

The invention will be described below with reference to the drawings in which
fig. 1 illustrates the fundamentals of a prior art processing system,
fig. 2 illustrates the fundamentals of an instance system according to the invention,
fig. 3 illustrates a system of instances according to a preferred embodiment of the invention,
fig. 4 illustrates the processing of instances according to the invention
fig. 5 illustrates a simple command hierarchy according to the invention
fig. 6 shows an example of a hierarchy in a system according to the invention,

### Detailed description

As the fundamentals of the present invention may be hardly conceivable the description will be supported by a short illustration of a prior art system, and a short illustration of the system according to the invention by means of the same illustrative terms.

It should be emphasised that the illustrative presentation in no way should be regarded as restrictive with respect to the scope of the invention. The example illustrates only one example of definition of terms.

### Brief illustration of a prior art system of instances

In the following, the fundamentals of the invention will be illustrated by means of an example involving a playground scenario.

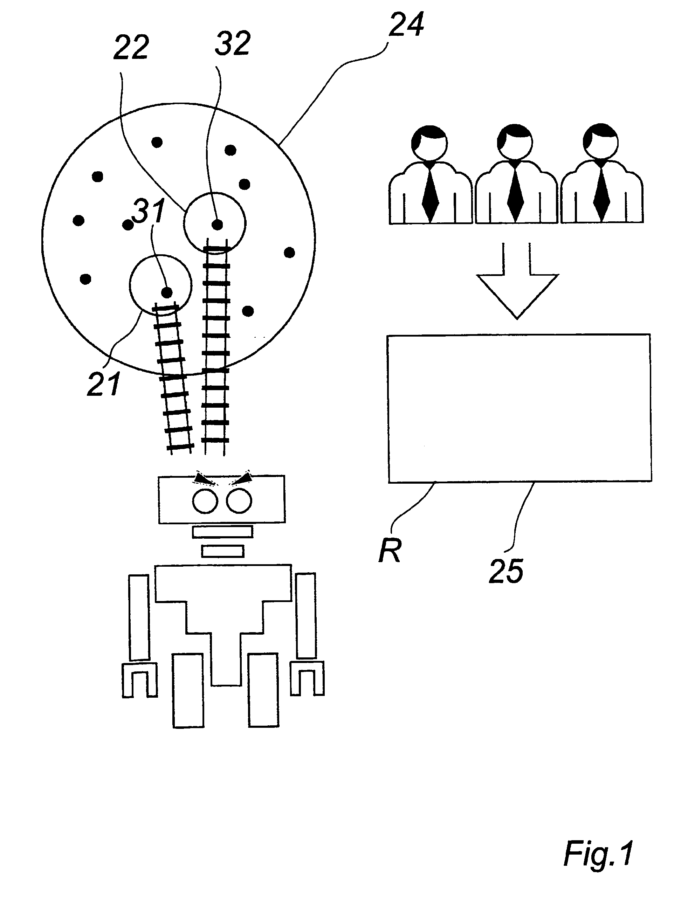

Referring to fig.1, the illustrated system comprises three levels of playground sandboxes. Nevertheless, it should be emphasised the sandboxes may be organised in further levels.

A first level of playground sandboxes 21, 22 respectively dedicate an area in which two children 31, 32 may play. Each child may only play in his own sandbox 21, 22.

Each sandbox 21, 22 may contain certain elements, e.g. sand, plastic shovels, plastic buckets, a little excavator, etc..

A second level of sandboxes comprises only one sandbox 24. The sandbox contains the above-described sandboxes 21 and 22.

A robot controlling everything within the sandbox 24 governs this sandbox 24 and everything within it strictly according to a playground regulation 25.
Accordingly the robot may, according to the shown example, take part in the play in all the sandboxes 21 and 22.

The way the overall play procedure is governed is that every child is connected to the robot by means of a railway track, on which a train comprising different types of coaches may drive. If a child wishes the robot to perform a certain task for him, he will have to use a special type of wagon, which in combination with the eventually other wagons and the train it self indicate that the child wants a certain task to be performed. The routine of communicating to the robot is that a child combines a certain type of command train, and subsequently he will initiate the departure of the train. When the train arrives at the robot, the robot will look at the train and identify exactly how the train is combined. Subsequently, the robot will consult some playground regulations. If the playground regulations comprise the current combined train, the robot will do exactly what the regulation tells it to do. If the combination is not recognised, the robot will preferably do nothing.

Consequently, if the child in the sandbox 21 wants to have a further toys within his sandbox or wants to perform a certain playing act, such as building a sandcastle, of course within his own sand box, he will always have to ask the robot, who subsequently carefully consults the regulation before the toy or the action is performed by the robot.

Due to the fact that the children playing in the playground are very lazy, every action made in the playground has to be performed by the robot. Even though this way of playing seems a little boring, the children usually enjoys playing in this particular playground, as the regulations makes the robot do a lot of amusing things by its own initiative. Things happen even if the children are doing nothing.

This particular feature makes this playground very attractive to the children.

Moreover, this strict governing of the playground ensures that the play on the playground will not be distorted by conflicts between the children and the robot.

Nevertheless, the spoiled children continuously claim more and more exiting performances from the robot, and consequently the board writing the regulations of the playground has to write even more complicated regulations, as the robot requires instructions in order to perform any action. Every action, combination of actions or sequences of actions has to be prepared by the board in order to ensure that playing goes on in a both amusing and practical way.

The robot is in fact mechanically or technically able to perform almost every thinkable action. The problem is nevertheless that the board has to define these thinkable actions in order to describe it to the robot.

The above described illustration shows the running on a computer of a prior art processing systems multi-user system in the fields of e.g. simulation, games or education. The real world analogy of the robot is a computer executing commands or code provided by user(s), i.e. the children of the computer. The board represents the program designer(s) who establishes the programming of the computer by means of the coding, i.e. the playground regulation.

The programming of the computer requires lots of programming, and the programmers have to predict every type of evolution in the processing of the program. Accordingly, the program designers will not only have to establish and control an exhaustive number of instance types and a likewise great number of methods according to which the instances of the processing system may be changed, but the program designers shall moreover be able to predict a large space of possible commands and even worse combinations of choices fitting to the choices of the users when they accesses the system.

A problem of the two level playground is that the board directing the playground has to spend a lot of time in writing the playground regulation, which becomes very comprehensive.

The above mentioned comprehensive program designing will moreover inflict that the hardware required for the executing of the program in many systems has to be at least state of the art.

### Brief illustration of a system of instances according to the invention

In the following, the fundamentals of the invention will be illustrated by means of an example involving a playground scenario.

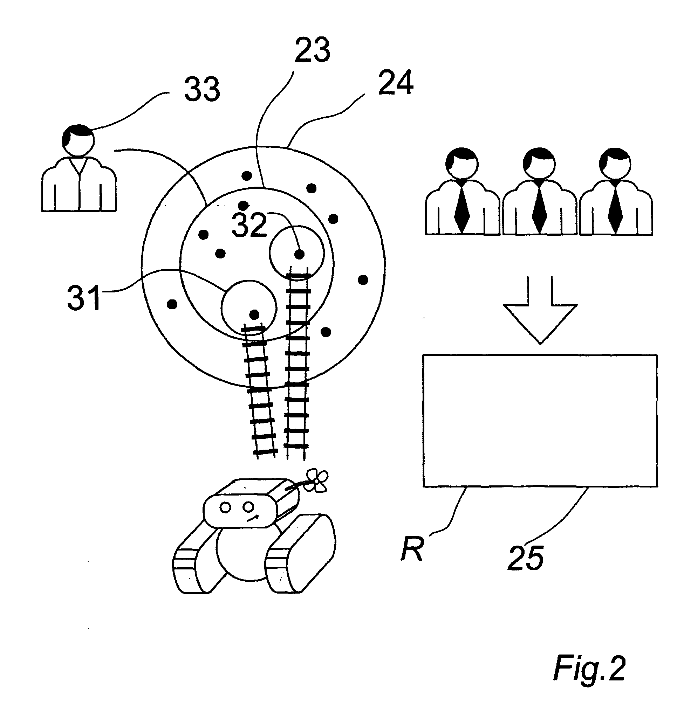

Referring to fig. 2, the illustrated system comprises a three levels of playground sandboxes. Nevertheless, it should be emphasised the sandboxes may be organised in further levels.

As described in the above prior art system a first level of playground sandboxes 21, 22 respectively dedicates an area in which two children 31, 32 may play. Each child may only play in his own sandbox 21, 22.

Each sandbox 21, 22 may contain certain elements, e.g. sand, plastic shovels, plastic buckets, a little excavator, etc..

An intermediate level playground of sandboxes comprises only one sandbox 23. This intermediate level sandbox 23 contains both of the above described first level sandboxes 21, 22.

A pedagogue 33 controlling the sandbox 23 may thus, according to the shown embodiment of the invention both play only in his own sandbox 23, which includes the sandboxes 21, 22 of the children 31, 32.

A railway track is running from each of the children's sandboxes through the sandbox 23 of the pedagogue 33 to a second level of sandboxes comprising one sandbox 24. The sandbox contains all the above-described sandboxes 21, 22 and 23.

A robot controlling everything within the sandbox 24 governs this sandbox 24. Accordingly the robot may take part in the play in all the sandboxes 21, 22 and 23.

The robot governs the sandbox and everything within it strictly according to a playground regulation 25.

As described above, the overall play procedure in the prior art system is governed is that every child is connected to the robot by means of a railway track, on which a train comprising different types of coaches may drive. If a child wishes the robot to perform a certain task for him, he will have to use a special type of wagon, which in combination with the eventually other wagons and the train it self indicate that the child wants a certain task to be performed. The routine of communicating to the robot is that a child combines a certain type of command train, and subsequently he will initiate the departure of the train. When the train arrives at the robot, the robot will look at the train and identify exactly how the train is combined. Subsequently, the robot will consult some playground regulations. If the playground regulations comprise the current combined train, the robot will do exactly what the regulation tells it to do. If the combination is not recognised, the robot will preferably do nothing.

As the railway track runs through the territory of the pedagogue, i.e. the sandbox 23, the pedagogue is enabled to recognise every command train sent from any of the children, and the pedagogue has moreover the possibility of changing some of the command coaches of the passing train. Moreover, he may be the exclusive lucky owner of train types coaches and he may invoke combinations of train coaches never established by the children, who originally initiated the departure of the current train. In another wording, the pedagogue may change or convert the content and combination of the train.

As the robot receiving the trains, according to the shown embodiment of the invention has no hindsight enabling it to acknowledge the origin of the different coaches of the train, it will simply recognise the train and compare it to the regulations and follow the instructions made by the board.

Clearly, the work of the board has been made easier, as the intuitive excitement and possibilities is no longer needed to pre-scripted. In the system according to the invention the pedagogue will observe the play of the children, and he will adapt the functioning of the robot to the children playing on the playground.

It should be noted that an attractive consequence of the system set-up is that the hardware requirements to the robot are less according to the system. The robot on the shown playground will not have to be able to recognise huge combinations of incidents, as the board may omit most complicated regulations.

It should moreover be noted that the dynamic processing of the instances according to the invention may of course result in a dynamic varying in the size of the set of instances. An analogy to this feature would be that the size or the content of each of the sandboxes may vary during the processing of the system.

According to the shown illustration, the pedagogue will never gain completely control over the playground scenario, as the regulations will always govern every action performed. This is in particular important with respect to the processing of the play in the sandbox, as the play will go on, even if the children are passive, due to the fact that the regulations are adapted to make things happen without superior control. This illustrates an important feature of the invention, as the pedagogue is intended to supplement the processing of the playing in such a way that the scripting of the playground regulations becomes easier.

### Brief description of a preferred embodiment of the invention

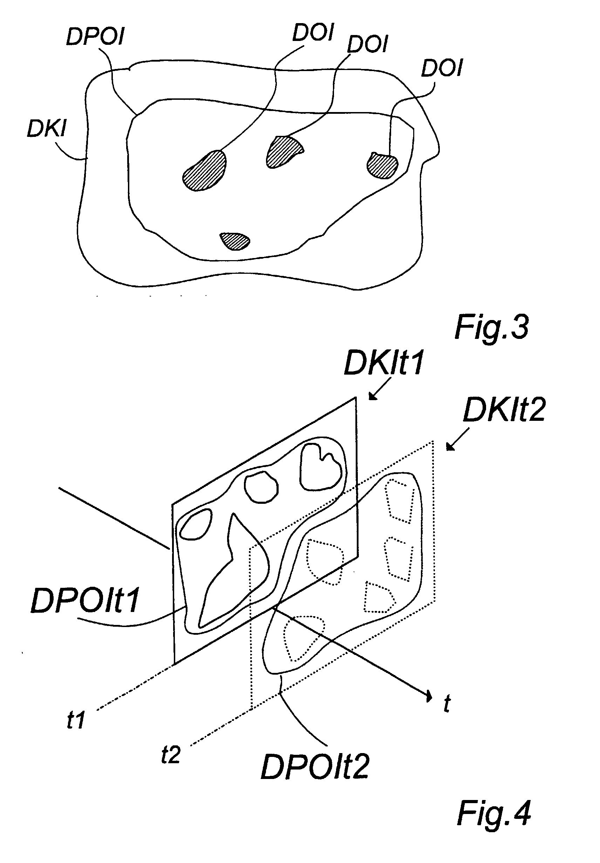

Fig. 3 shows basic features regarding the organising of instances according to the invention. The shown preferred embodiment of the invention will be described in the field of a computer game. The specific illustrated type of game is a multi-user role playing game.

Each player accesses the game via a user interface adapted for a regular player. The access may be made by means of de-central personal computers, and they may be connected via the internet or a local net.

The operator interface dedicates a set of dedicated instances to each player, DOI.

The dedicated sets of instances is established as a set of variables which may be modified during processing of the game. Each of the shown sets DOI represents a role controlled by a player, and each player controls a unique set of instances which is non-overlapping with other player instances, i.e.. roles.

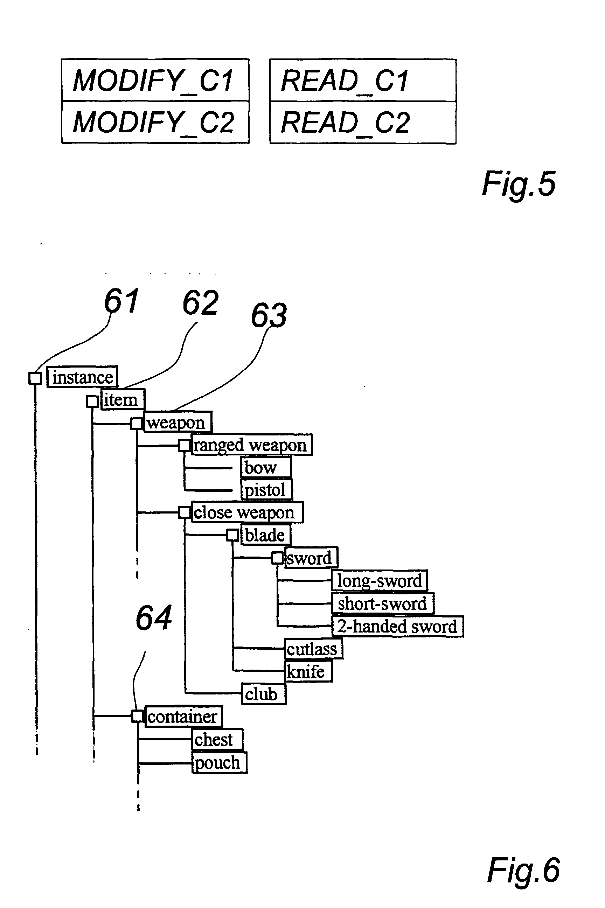

Each player may address his unique dedicated set of instances by means of basically the same commands OC. According to the shown embodiment, the player may only access the game instance system by means of a special types of operator commands, i.e. so-called second category commands. The definition of these kinds of commands will be explained in fig. 5.

Fig. 5 shows the basic understanding of the categorised commands according to the preferred embodiment of the invention.

MODIFY_C1 and READ_C1 represents so-called category 1 commands, which according to the shown embodiment comprises commands or methods in the broadest sense execute or returns a certain type of processing unconditionally.

MODIFY_C1 commands result in e.g. modifications of instances, deleting or inserting of instances, while READ_C1 returns a certain desired value unfiltered.

MODIFY_C2 and READ_C2 represents so-called category 2 commands, which according to the shown embodiment comprises commands or methods in the broadest sense execute or returns a certain type of processing conditionally, i.e. only if certain conditions are met.

MODIFY_C2 commands result in e.g. modifications of instances, deleting or inserting of instances, while READ_C2 returns a certain desired value with conditional filtering.

Returning now to fig. 3, the second category commands fitting to each set of instances DOI, enables each player to initiate a certain actions in order to obtain a desired result. Whether the desired result is obtained or not depends upon whether the conditions related to the commands are met.

If a player for instance asks for a certain kind of information, he will only gain the desired knowledge if certain more or less hidden conditions are met.

The shown system of dedicated instances DOI are all subsets of a so-called dedicated privileged operator set of instances DPOI being under the control of a privileged operator or more specifically a game master. As the instances operated by the ordinary game players are all contained in this set of instances DPOI, the game master basically has the ability to do whatever he wants to, at least in a technical sense.

Moreover, the game master may command by means of first category commands. This feature enables the game master to establish certain desired instances immediately and unconditionally within the domain of each of the game players, i.e. the dedicated operator instances.

Finally all the instances of the system, i.e. the dedicated kernel instances are every instance I of the system.

Fig. 4 illustrates the processing of the above described system of instances, as DKIt1 shows the set of instances of a system at a time t1 and DKIt2 shows a processed set of instances resulting from processing of the instances of DKIt1.

Moreover, it should be noted that the instances have not only been changed, but a further instance ADDI has been added to the system.

According to the preferred embodiment of the invention, the ADDI instances may be added to the system of instances by the kernel processing itself, or it may have been added directly by the game master. No player may add or remove an instance according to the shown embodiment.

Fig. 6 shows an example of the basic type definitions of the above-described game. For the sake of illustrative simplicity the example is heavily truncated.

As it appears, a hierarchy of instance types is established in an object oriented manner. The role player system is programmed in Visual C++.

The shown hierarchy establishes in it self known manner basic instance types of an embodiment of the invention.

The root of the shown hierarchy is an Instance 61. The instance has the ability to be inserted into the game, visible or not. Every instance has a position.

A subnode of the Instance 61 is a node called Item 62. The Item 62 represents material instances in the game. Item 62 has a weight, extension and a position, enherited from Instance 61.

A sub-node of Item 62 is the node Weapon 63. Weapon may be used for attacking other creatures. The harmfulness of the weapon is contained in Weapon 63. All the further sub-nodes of Weapon 63 inherit the properties of Weapon 63

A further sub-node of Item 62 is a node Container 64. A container may contain Items and contains information determining how many Items the Container 64 may contain, and the total allowable weight.

In order to illustrate example of the implementing of the above described type definitions, the below table 7 shows the main components of the C++ code establishing the Item node and the container node. Each of the nodes has to be established by means of an analogue programming.

The basic functionality and components of the coding will be described in details below.

Referring to the line numbers 101-102, C++ registers the data type vector.

Subsequently, the name of the the Instance class is declared in line 104. The class is not defined in the present example.

Line 105 is the beginning of the class Item, which is inherited from Instance. In line 106, all variable defined after public may be accessed from the outside of the object.

In line 107 weight is established as a floating decimal, double precision, representing the weight of Item.

In line 108 _size is likewise declared as a decimal.

In line 112 a method weight() is declared. Note that the method is defined in line 115.

In line 113 size() is declared, and the method is likewise defined in line 18.

In line 114 ; defined that Item contains no further methods or variables.

Line 115 is the beginning of the pre-declared weight() definition.

In line 116 weight () is returned. This feature ensures that there is read only on the weight of an Item.

Line 117 end the weight () method

Lines 118-20 defines the size method correspondingly.

Line 122 is the beginning of the container class. The container class is inherited by the Item.

Line 124 defines an array containing all the Items comprised in the container.

Line 125 defines a so-called private method is_room which may only be called by the object itself. is_room will check whether the container has space enough for the new item.

Again, line 126 defines the subsequently methods and variables as public which may be accessed from the outside of the object.

In line 127 weight_capacity is defined as a decimal determining how much the combined number of items may occupy.

In line 128 number_capacity is defined as an integer determining how many items the container may contain.

In line 130 weight () is moreover declared in Item.weight () in the container. This definition will dominate the predefined weight () defined in Item.

In line 135 a method look() returns an "Item const&". This means that the person looking at the value may only read and not change the returned value.

In line 136 insert () will try to insert an Item. The return value bool is a logic value returning the value "true" when the operation has succeeded. The meaning of that the Item is now of the type "Item const&" is that only Container may not change in the argument.

In line 138 a method remove () removes a single item from the container.

In line 139 a method empty () empties a container and transfers the content to an array. The emptied items are consequently not stored, which was the case in the above described method remove ().

Line 141 defines the is_room(). Three demands has to be fulfilled in order to provide room for a new item.
1. The number of the items in the container must be less and than the capacity
2. The new accumulated weight of the container may not exceed the capacity
3. The size of the item must be less the size of the container. Please note that the container is also an Item, as it has inherited the size() method.

Line 146 is the beginning of the definition of Container.weight ()

In line 147 it should be noted that the _weight variable is inherited from Item.

In line 148 the accumulated weight of the content is determined as weight()=_weight + content (0) .weight()+...+content(NUMBER()-1) .

Line 151 is a definition of the number () method.

In line 155 the starting index of the vector data type is adjsuted from the predefined value of 0 to 1.

In line 159 content.push_back (Item) inserts a copy of Item after all the other fields in the array.

In line 165 the method content.erase() deletes a single field and its content. Again, the index starting value is modified to 1.

In line 168 a copy of the accumulated content of the container is stored in an array.

Finally a copy is returned.

An advantage of the object oriented programming concept is clearly demonstrated in the above example, as a container may not only contain Items also is an item itself.

An example related to the aforementioned role playing game a small scenario of three objects is a stone, a purse and suitcase.

The stone has a weight of 0.15 kg and a size of 0.01 meters.

The purse weights 0.05 when it is empty and has a size of 0.02 meters, a capacity of 20 in number and a capacity in weight of 1,0 kg.

The suitcase weights without content 0.7 kg and has a size of 0.25 meters, a capacity in numbers of five and a capacity in weight of 15 kg.

Consequently, the system enables the stone to be out into either the purse or the suitcase. Moreover the stone may be put into purse and subsequently the purse into the suitcase, due to the fact that both the stone and the purse is an item, due to the inherited properties

A further feature of the described example may be extracted when looking at lines 164-66 defining a method removing something from the container, and in the lines 167-70 defining a method transferring the content of a container into an array for later user.

First of all, within the terms of the above described fig. 5 the stand-alone methods remove and empty may be regarded as a first category commands, as they, when directly accessed by means of a corresponding user interface unconditionally executes the desired methods. It should be noted that the user of course, privileged or not, has no direct access to the methods of the programming codes. The methods may usually be accessible via a suitably user interface.

If, on the other hand, the user interface establishes an interface accessing the above described methods via a kind of filter establishing some conditions which has to be fulfilled in order to execute the methods.

The routine "empty" would typically, according to the preferred embodiment of the invention be accessible to an ordinary player as a second category command, i.e. via further pre-routines (not shown), while the same method would be accessible to a privileged operator as a first category command, i.e. and unconditional execution of the desired processing.

Usually a game master would also be able to access the same second category commands if he desires to do so, but the tough part of the game is that he may modify the operated instances directly.

Moreover the routine "remove" is a good example of a drastic method, which would usually be accessible only to the privileged operator, i.e. the game master. It should be noticed that execution of the command will result in a total disintegration of the content of the contained. The routine remove may be regarded as an exclusive privileged command, regardless the category of the command.

Table 1 shows an example of C++ coding of two selected nodes of the hierarchy of fig. 6,

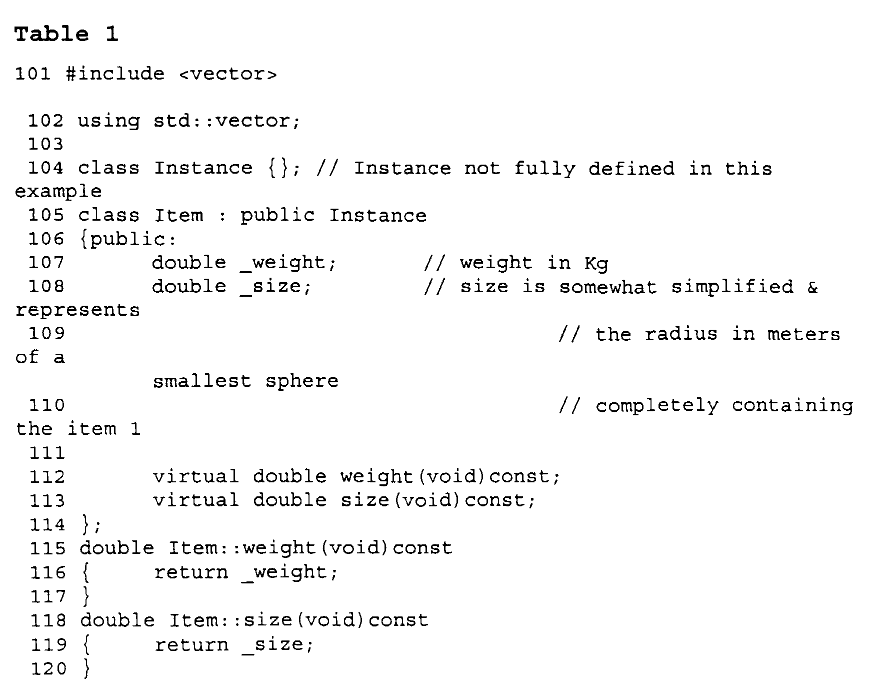

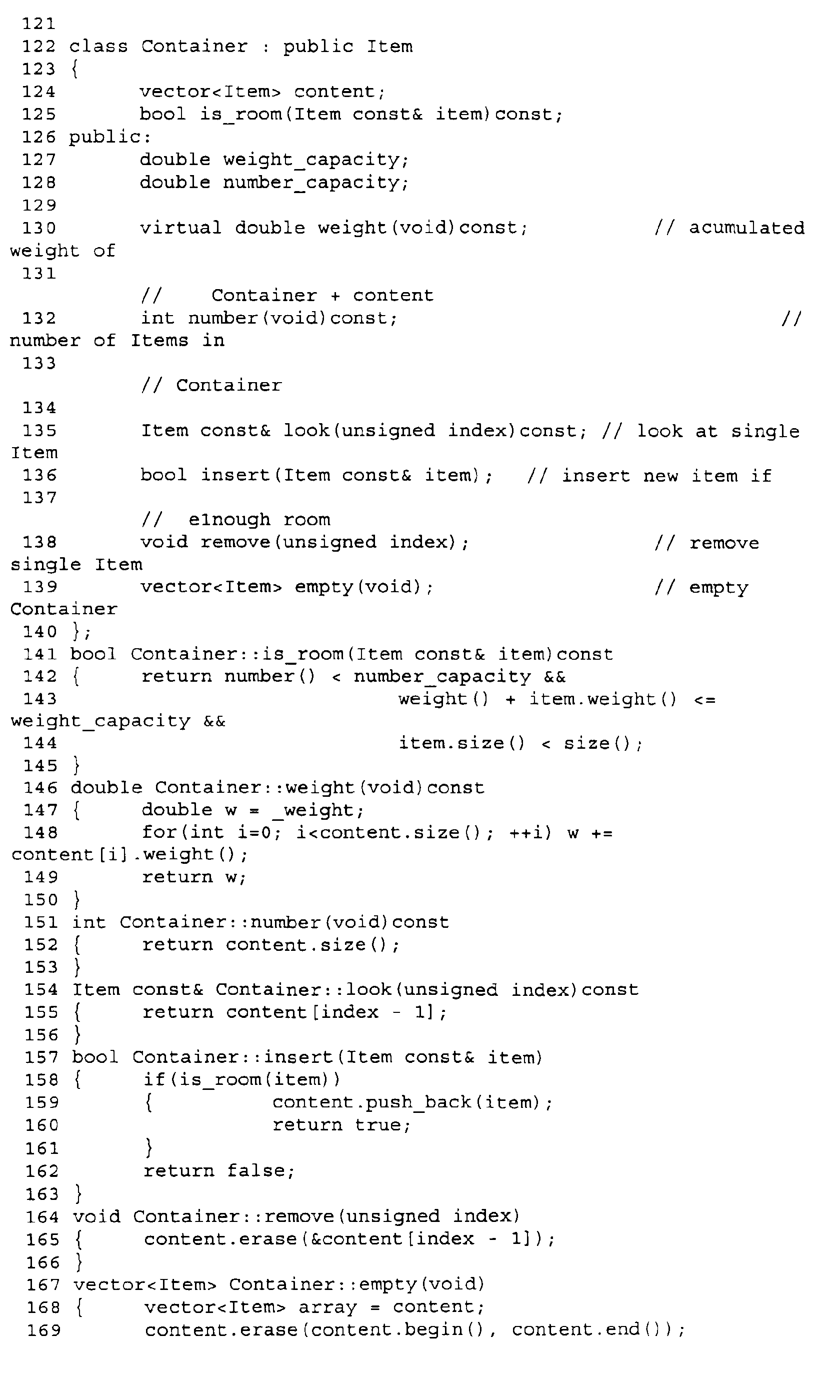

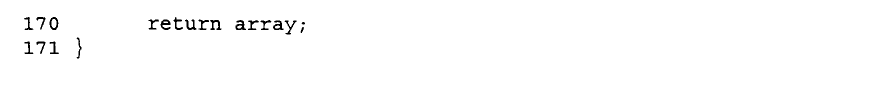

## Claims

1. System of instances (I), each instance (I) comprising at least zero set of variables, each set of variable having at least one possible state (PS)
said system comprising at least one operator interface (OI)
said operator interface (OI) enabling at least one operator (O) to command a set of dedicated operator instances (DOI) by means of operator commands (OC)
said commands (OC) enabling the said operator to modify the said dedicated operator instances (DOI) according to rules (R)
said system comprising at least one privileged operator interface (POI)
said privileged operator interface (POI) enabling at least one privileged operator (PO) to command a set of dedicated privileged operator instances (DPOI) by means of privileged operator commands (POC)
said commands (POC) enabling the said privileged operator (PO) to modify the said dedicated privileged operator instances according to rules (R)
said system comprising at least one kernel (K)
said kernel controlling/commanding a set of dedicated kernel instances (DKI) by means of kernel commands (KC)
said kernel commands (KC) modifying the dedicated kernel instances (DKI) according to rules (R),
and wherein said kernel may add or remove instances (I) according to rules (R)
said set(s) or a subset of said set(s) of dedicated operator instance(s) (DOI) being a subset of the said dedicated privileged operator instances (DPOI), and said dedicated privileged operator instance(s) (DPOI being a subset of the said dedicated kernel instances (DKI),
said set of dedicated operator instances (DOI) being non-overlapping.

2. System of instances (I) according to claim 1, wherein the said at least one privileged operator (PO) may add or remove instances (I) from the dedicated kernel instance(s) (DKI).

3. System of instances (I) according to claim 1 or 2, wherein said privileged operator commands (POC) having higher priority than the said operator commands (OC), said kernel commands (KC) having higher priority than the said privileged operator commands (POC)

4. System of instances (I) according to the claims 1-3, wherein at least a subset of the operator commands (OC) and/or a subset of the privileged operator commands (POC) are organised in at least two command categories (C1, C2) in such a way that a first command category (C1) comprises commands resulting in a direct unconditional modification of the system of instances (I),
and a second command category (C2) comprises commands resulting in a conditional modification of the system of instances (I).

5. System of instances (I) according to claim 4, wherein the said operator commands (OC) comprises second category commands (C2), and wherein the said privileged operator commands comprises first and second category commands (C1, C2) preferably only first category commands (C1)

6. System of instances (I) according to the claims 1-5, wherein the set of operator commands (OC) is a subset of the privileged operator commands (POC).

7. System of instances (I) according to claims 1-6, wherein said commands (OC) or a subset of said commands (OC) are pipelined through the privileged operator interface (POI) in such a way that at least one privileged operator (PO) may convert the said operator commands (OC) and in such a way the operator instances (DOI) and/or the dedicated privileged operator instances (DPOI) may be modified according to the said converted operator commands (POC) according to rules (R)

8. System of instances (I) according to the claims 1-7, wherein each instance (I) may contain further instances, i.e. sub-instances.

9. System of instances (I) according to the claims 1-8, wherein instances (I) may dynamically added or removed from the sets of instances (DOI, DPOI, DKI, OII) in dependency of commands (OC, POC, KC) and rules (R).

10. System of instances (I) according to the claims 1-9, wherein the system of instances (I) comprises a set of insertable instances or sequences of instances (II) prepared and presented to the privileged operator in such a way that the operator may insert these instances or sequences of instances (II) by means of privileged operator commands (POC)

11. System of instances (I) according to the claims 1-10, wherein the operator interfaces (OI) are established in such a way that commanding of the dedicated privileged operator instances (DPOI) by means of privileged operator commands (POC) is hidden or partly hidden to the operators of the operator interfaces (OI) in such a way that the user(s) of the operator interfaces (OI) will only recognise the result of the said commands (POC)

12. System of instances (I) according to the claims 1-11, wherein the interfaces (OI, POI) are established in such a way that commanding of the dedicated instances (I) by means of commands (OC, POC, KC) is hidden or partly hidden to the operators (O, PO) of the interfaces (OI, POI) in such a way that the users will only recognise the result of the said commands (OC, POC, KC)

13. System of instances (I) according to claims 1-12, wherein the said operator interface(s) (OI) comprises at least one set of operator interface instances (OII) representing at least a subset of said dedicated operator instances (DOI), said operator interface instances (OII) establishing an interface representation of the represented said at least a subset of dedicated operator instances.

14. System of instances (I) according to claim 13, wherein at least one set the operator interface instances (OII) moreover represents at least one subset of the dedicated privileged operator instances (DPOI).

15. System of instances (I) according to claims 1-14, wherein the operator interface (OI) is adapted to at least two operators in such a way that each of the operators has access to the system of instances by means of a data processing unit, such as a personal computer (PC),
said system of instances being processed de-centrally on the said separate personal computers (PC), said personal computers communication via a network

16. System of instances (I) according to the claims 1-15, wherein the system as adapted for execution of multi-player games

17. System of instances (I) according to the claims 1-16, wherein each player accesses a role by means of the operator interface (OI), said role representing one role instance set (RIS), said role instance set (RIS) being the set of dedicated operator instances (DOI).

18. Method of processing a system according to the claims 1-17, wherein the processing is in dependency of commands (PO, POC, KC) and rules (R)

19. Data carrier comprising code means for establishing the system according to claim 1-17 and/or the method according to claim 18.
